# EUROPÄISCHE PATENTSCHRIFT

(11) **EP 0 365 715 B1**
(45) Veröffentlichungstag und Bekanntmachung des Hinweises auf die Patenterteilung: **02.06.1993**
(21) Anmeldenummer: 88118933.6
(22) Anmeldetag: 14.11.1988
(51) Int. Cl.: F16H 59/02, B60K 20/02, B60K 28/10

(54) **Schaltvorrichtung für ein Automatikgetriebe eines Kraftfahrzeugs**
Gear change mechanism for an automatic gearbox of a motor vehicle
Dispositif de changement de vitesse pour une boîte automatique de véhicule automobile

(30) Priorität: 29.09.1988 DE 3832969
(43) Veröffentlichungstag der Anmeldung: 02.05.1990
(73) Patentinhaber: Dr.Ing.h.c. F. Porsche Aktiengesellschaft, 70435 Stuttgart (DE)
(72) Erfinder: Stelter, Norbert, Dipl.-Ing., D-7251 Weissach (DE); Maier, Ulrich, D-7149 Freiberg/N (DE); Müller, Robert, Dipl.-Ing., D-7251 Mönsheim (DE); Stehle, Heinz, Dipl.-Ing., D-7251 Weissach (DE)

(56) Entgegenhaltungen:
- EP-A- 0 110 428
- EP-A- 0 159 104
- WO-A-87/00806
- DE-A- 3 807 881
- US-A- 3 292 450
- US-A- 3 646 835
- US-A- 4 485 694

## Beschreibung

Die Erfindung betrifft eine Schaltvorrichtung für ein Automatikgetriebe eines Kraftfahrzeugs nach der Gattung des Patentanspruches 1.

Nach der nicht vorveröffentlichten DE 38 07 881 ist eine Schaltvorrichtung für ein Automatikgetriebe eines Kraftfahrzeuges geschaffen, welche ein Programm "Manuelle Gangvorwahl" eines über ein elektronisches Steuergerät gesteuerten Automatikgetriebes nach Bosch, Technische Berichte 7 (1983)4, Seiten 160-166, mit dem Wählhebel realisierbar macht. Ein Programmschalter, welcher einem Fahrer eine Wahl zwischen einem Economy-, einem Leistungsprogramm und einem Programm zur manuellen Anwahl der Getriebegänge über den Wählhebel ermöglicht, kann hierbei entfallen. Das Getriebe kann bedienungsfreundlicher gestaltet und kostengünstiger hergestellt werden.

Dies wird in erster Linie dadurch erreicht, daß der Wählhebel über eine Quergasse in eine zur ersten Schaltgasse parallele zweite Schaltgasse umschaltbar ist und daß mit dem Verschwenken des Wählhebels in der zweiten Schaltgasse die Vorwärtsgänge (1, 2, 3, 4) des Getriebes manuell schaltbar sind. In einer besonders vorteilhaften Ausführung ist hierbei der Wählhebel in der zweiten Schaltgasse als Wipphebel geführt, welcher bei einem Verschwenkvorgang aus einer stabilen Mittellage (Ruhelage) heraus in die eine Richtung eine Rückschaltung und in die andere Richtung eine Hochschaltung des Automatikgetriebes auslöst.

Es ist Aufgabe der Erfindung, die Bedienungssicherheit eines derartigen Automatikgetriebes weiter zu erhöhen.

Die Aufgabe ist durch die kennzeichnenden Merkmale des Anspruchs 1 oder des Anspruchs 2 gelöst. Weitere, die Erfindung in vorteilhafter Weise ausgestaltende Merkmale sind in den Unteransprüchen enthalten.

Die Vorteile der Erfindung sind in erster Linie darin zu sehen, daß die Bedienungs- und Betriebssicherheit des Automatikgetriebes weiter erhöht wird. Insbesondere werden hierdurch beim Wechsel des Wählhebels von einer Gasse zur anderen jeweils ungewollte (und für den Fahrer überraschend kommende) Schaltungen vermieden.

Dies wird erreicht, indem ein Steuergerät zur Steuerung des Getriebes eine Umschalteinheit umfaßt, welche beim Einführen des Wählhebels aus der ersten Schaltgasse heraus in die zweite Schaltgasse eine Beibehaltung des aktuellen Getriebeganges wenigstens solange bewirkt, wie eine Drehzahl einer Antriebsbrennkraftmaschine eine obere Drehzahlgrenze noch nicht überschritten oder eine untere Drehzahlgrenze noch nicht unterschritten hat, oder der Wählhebel in der zweiten Schaltgasse noch nicht zur Auslösung einer Hoch-/Rückschaltung verschwenkt worden ist.

Ebenso wird beim Einführen des Wählhebels von der zweiten Schaltgasse in die erste der aktuell eingelegte Getriebegang wenigstens solange beibehalten, bis das Steuergerät eine automatische Getriebeganganpassung neu vorgenommen hat oder bis die Brennkraftmaschine ihre Drehzahlgrenzen erreicht hat.

Die Erfindung ist beispielhaft anhand von Zeichnung erläutert und nachstehend näher beschrieben.

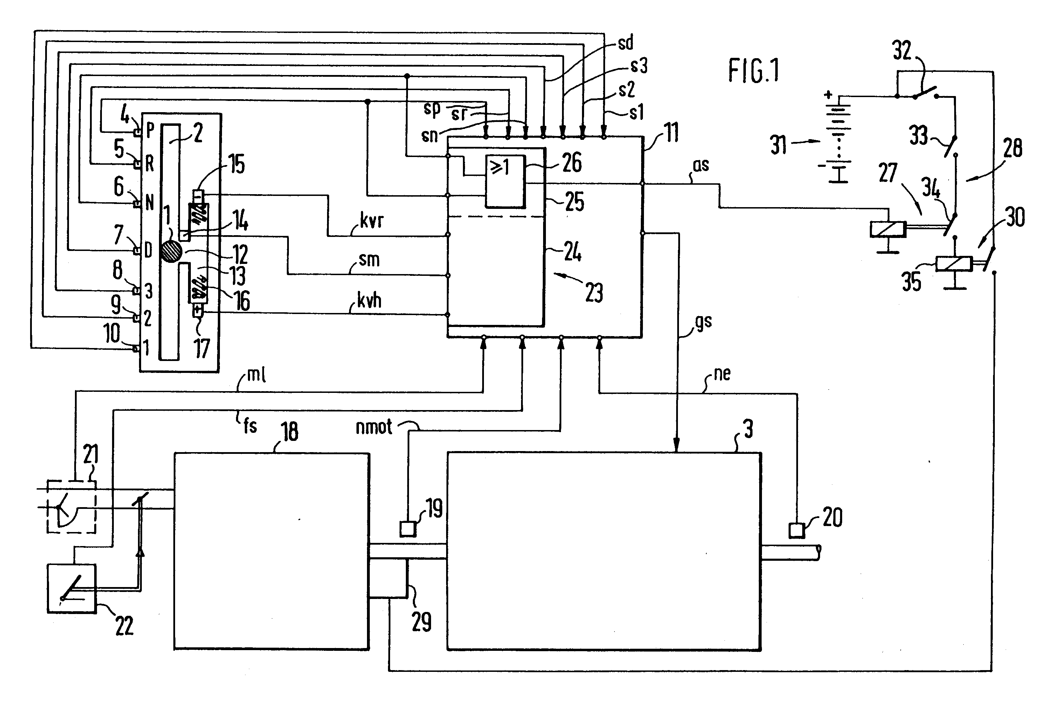

Es zeigt
- Fig. 1: ein Getriebesteuerungssystem mit einer Schaltvorrichtung und einer Umschalteinheit nach der Erfindung,
- Fig. 2: ein Schaltbild einer Umschalteinheit nach Fig. 1.

Mit einem Wählhbel 1, der in einer ersten Schaltgasse 2 in Längsrichtung des Kraftfahrzeugs verschwenkbar ist, sind die verschiedenen Stellungen P = Parken, R = Rückwärtsgang, N = Neutral-Null, D = Drive mit den Gängen 1 bis 4, 3 (Beschränkung auf die untersten drei Gänge), 2 (Beschränkung auf die untersten zwei Gänge), 1 (erster Gang) eines automatischen Getriebes frei anwählbar. Die Wählstellungen werden durch Sensoren 4 bis 10 erfaßt, die elektrische Signale sp, sr, sn, sd, s3, s2 und s1 an ein Steuergerät 11 des Getriebes 3 abgehen. Aus der Wählstellung D heraus ist der Wählhebel 1 über eine Quergasse 12 in eine zur ersten Schaltgasse 2 parallele Schaltgasse 13 umschaltbar. Der Umschaltvorgang wird durch einen Sensor 14 erfaßt, der dabei ein Signal sm an das Steuergerät 11 liefert.

Beim Verschwenken des Wählhebels 1 in der zweiten Schaltgasse 13 in Fahrtrichtung des Kraftfahrzeugs spricht ein Minus-Sensor 15 an, dessen Signal kvr das Steuergerät 11 veranlaßt, über Getriebesteuersignale gs am Getriebe 3 eine Rückschaltung um einen Gang vorzunehmen. Danach wird der Wählhebel 1 durch eine Feder 16 in die neutrale Mittellage der Schaltgasse 13 zurückgedrückt. Beim nochmaligen Antippen am Sensor 15 erfolgt eine weitere Rückschaltung um einen Gang, falls nicht bereits der höchste Getriebegang eingelegt ist. Beim Verschwenken des Wählhebels 1 entgegen der Fahrtrichtung gibt ein Plus-Sensor 17 ein Signal kvh an das Steuergerät 11 ab und löst am Getriebe 3 eine Hochschaltung um einen Gang aus.

Eine manuell angeforderte Hochschaltung wird hierbei jedoch nur dann ausgeführt, sofern eine Motordrehzahl nmot einer das Getriebe 3 antreibenden Brennkraftmaschine 18 im nächsthöheren Gang eine Minimaldrehzahl nmin nicht unterschreitet; entsprechend wird eine am Wählhebel 1 ausgelegte Rückschaltung unterdrückt, sofern die Motordrehzahl nmot im nächstniedrigeren Gang die Maximaldrehzahl nmax der Brennkraftmaschine übersteigen würde.

Die Motordrehzahl nmot wird hierbei über einen Motordrehzahlsensor 19 ermittelt und ebenso wie eine Getriebeausgangsdrehzahl ne (Fahrgeschwindigkeitsgeber 20), ein Motorlastsignal ml (Luftmengen-, Luftmassen- oder Drosselklappenstellungsgeber 21) und ein Fahrpedalstellungssignal fs eines Fahrpedalstellungsgebers 22 dem Steuergerät 11 zur Verfügung gestellt, welches aus der gegebenen Eingangssignalkombination und der aktuell eingelegten Getriebegangstufe k die Getriebesteuersignale gs entsprechend der manuellen Gangvorwahl oder einem üblichen Automatikprogramm ermittelt.

Das Steuergerät 11, welches beispielsweise entsprechend Bosch Technische Berichte 7 (1983)4, Seiten 160 bis 166 realisiert sein kann, wird nun folgendermaßen erweitert: Ihm wird eine Umschalteinheit 23 eingegliedert, deren Teileinheit 24 insbesondere aufgrund des Signals sm vom Sensor 14 das Steuergerät 11 dahingehend beeinflußt, daß bei einem Einführen des Wählhebels 1 aus der ersten Schaltgasse 2 heraus in die zweite Schaltgasse 13 eine Beibehaltung des aktuell eingelegten Getriebeganges k wenigstens solange bewirkt wird, wie eine Drehzahl nmot einer Antriebs-Brennkraftmaschine 18 die obere Drehzahlgrenze nmax noch nicht überschritten oder die untere Drehzahlgrenze nmin noch nicht unterschritten hat oder der Wählhebel 1 in der zweiten Schaltgasse 13 noch nicht zur Auslösung einer Hochschaltung oder Rückschaltung verschwenkt worden ist.

Ebenso beeinflußt die Teileinheit 24 der Umschalteinheit 23 das Steuergerät 11 derart, daß bei einem Einführen des Wählhebels 1 aus der zweiten Schaltgasse 13 heraus in die erste Schaltgasse 2 eine Beibehaltung des aktuell eingelegten Getriebeganges k wenigstens solange bewirkt wird, bis das Steuergerät 11 eine automatische Getriebeganganpassung neu vorgenommen hat oder wie eine Drehzahl nmot einer Antriebs-Brennkraftmaschine 18 die erste obere Drehzahlgrenze noch nicht überschritten oder die zweite untere Drehzahlgrenze noch nicht unterschritten hat.

Die Umschalteinheit 23 umfaßt ferner eine zweite Teileinheit 25, welche ein Starten der Brennkraftmaschine bei einem in der zweiten Schaltgasse 13 befindlichen Wählhebel verhindert; insbesondere wird das Starten der Brennkraftmaschine nur in einer Parkstellung P und einer Neutralstellung N des Wählhebels in der ersten Schaltgasse zugelassen: Hierzu erfaßt die zweite Teileinheit 25 der Umschalteinheit 23 die Signale sp und sn der die Wählhebelstellungen P und N des Wählhebels 1 in der ersten Schaltgasse 2 umfassenden Sensoren 4 und 6.

Die Signale sp und sn werden über ein ODER-Glied 26 miteinander verknüpft; das ODER-Glied 26 steuert über ein Anlasserfreigabesignal as ein Relais 27 an. Das Relais 27 unterbricht in nicht angesteuertem Zustand einen Steuerstromkreis 28 eines das Starten der Brennkraftmaschine 18 mittels des Anlassers 29 auslösenden Startrelais 30. Der Steuerstromkreis 28 ist hierbei gebildet durch eine Reihenschaltung eines an einer Batterie 31 anliegenden Zündschalters 32, eines Startschalters 33, des Schließers 34 des Relais 27 und eine Spule 35 des Startrelais 30.

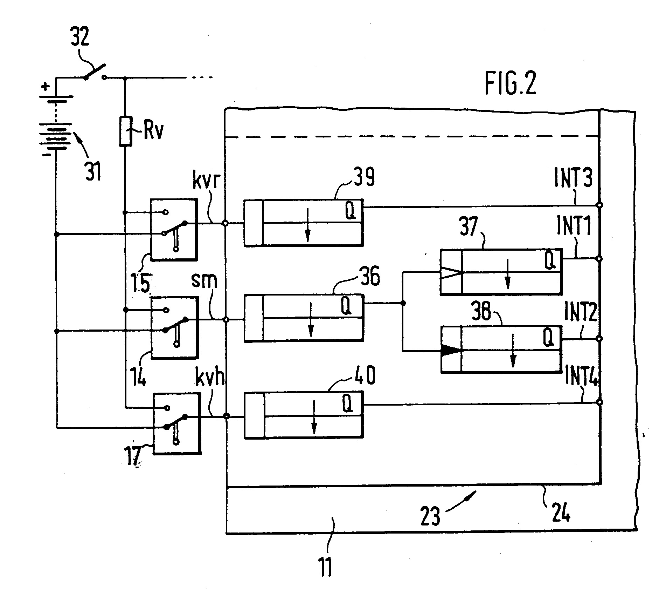

Nachstehend sei schließlich noch anhand Fig. 2 auf die (innere und äußere) Beschaltung der ersten Teileinheit 24 der Umschalteinheit 23 eingegangen. Es ist hierbei angenommen, daß die Sensoren 14 und 15 bzw. 17 als Endschalter Grenztaster) ausgeführt sind, die in unbetätigtem Zustand auf Masse (Minuspol der Batterie 31) und im betätigten Zustand (Wählhebel in der zweiten Schaltgasse 13 bzw. in einer der beiden Endlagen) über einen Vorwiderstand Rv und den Zündschalter 32 am Pluspol der Batterie 31 liegen.

Das so erzeugte Signal sm wird zur Kontaktentprellung auf ein erstes statisches, retriggerbares Monoflop 36 (monostabiler Multivibrator) geschaltet, über dessen Ausgang ein zweites, impulsflankengesteuertes, nicht retriggerbares Monoflop 37 angesteuert wird; dieses erzeugt bei einer positiven Impulsflanke ein erstes Unterbrechungssignal INT1. Der Ausgang des ersten Monoflops 36 steuert ein drittes impulsflankengesteuertes, nicht retriggerbares Monoflop 38 an, welches bei negativer Impulsflanke am Ausgang Q des erstes Monoflops 36 ein zweites Unterbrechungssignal INT2 erzeugt.

Ebenso werden die Signale kvr und kvh mittels je eines vierten und fünften, ein drittes und ein viertes Unterbrechungssignal INT3, INT4 erzeugenden. retriggerbaren, statisch angesteuerten Monoflops 39 und 40 entprellt, welche in der Umschalteinheit 23 integriert sein können (aber nicht müssen).

Über das erste Unterbrechungssignal INT1 wird im Steuergerät 11 von automatischer Gangwahl auf manuelle Gangwahl umgeschaltet, beispielsweise indem ein Flag gesetzt wird; die Umschaltung in umgekehrter Richtung wird durch das zweite Unterbrechungssignal INT2 bewirkt, welche das Flag rücksetzt.

Das im Steuergerät 11 ablaufende Programm zur Erzeugung der Getriebesteuersignale gs sieht in der Regel eine ständig durchlaufene Programmschleife vor, in welcher sämtliche Eingangssignale des Steuergeräts 11 ermittelt. die Grenzdrehzahlen der Brennkraftmaschine 18 (nmax, nmin) überwacht und gegebenenfalls hoch- bzw. zurückgeschaltet, das Flag abgefragt und je nach Zustand des Flags eine manuelle oder automatische Ganganpassung durchlaufen und wiederum gegebenenfalls hoch- bzw. zurückgeschaltet wird.

Durch das Unterbrechungssignal INT1 kann hierbei die automatische Ganganpassung jederzeit verlassen und der Programmdurchlauf erneut gestartet werden; auf diese Weise wird ein aktuell eingelegter Getriebegang beibehalten. Ebenso wird durch das Unterbrechungssignal INT2 die manuelle Ganganpassung verlassen und der Programmdurchlauf erneut gestartet.

Die Unterbrechungssignale INT3 und INT4 verringern bzw. erhöhen jeweils einen Gangstufenvorwahlzähler; in der manuellen Ganganpassung wird dann die Gangstufe dem Stand des Gangstufenvorwahlzählers angepaßt.

## Patentansprüche

1. Schaltvorrichtung für ein durch ein elektronisches Steuergerät gesteuertes automatisches Getriebe eines Kraftfahrzeugs, mit einem Wählhebel, durch dassen Verschwenken in einer ersten Schaltgasse die verschiedenen automatisch zu schaltenden Getriebegänge vorwählbar sind, wobei der Wählhebel (1) über eine Quergasse (12) in eine zur ersten Schaltgasse (2) parallele zweite Schaltgasse (13) umschaltbar ist, und wobei mit dem Wählhebel (1) durch Verschwenken in der zweiten Schaltgasse (13) die Vorwärtsgänge (1, 2, 3, 4) des Getriebes manuell schaltbar sind, **dadurch gekennzeichnet,** daß das Steuergerät (11) eine von einem das Umschalten von der ersten Schaltgasse (2) zur zweiten Schaltgasse (13) erfassenden Sensor (14) beeinflußte Umschalteinheit (23, 24) aufweist, welche bei einem Einführen des Wählhebels (1) aus der ersten Schaltgasse (2) heraus in die zweite Schaltgasse (13) eine Beibehaltung des aktuell eingelegten Getriebegangs (k) wenigstens solange bewirkt, wie die Drehzahl (nmot) der das Getriebe antreibenden Brennkraftmaschine (18) eine obere Drehzahlgrenze (nmax) noch nicht überschritten oder eine untere Drehzahlgrenze (nmin) noch nicht unterschritten hat, oder der Wählhebel (1) in der zweiten Schaltgasse (13) noch nicht verschwenkt worden ist.

2. Schaltvorrichtung nach Anspruch 1, dadurch gekennzeichnet, daß in der zweiten Schaltgasse durch einmaliges Verschwenken des Wählhebels (1) aus einer neutralen Mittellage heraus und durch Kontaktgabe an einem Plus-Sensor (17) in der einen Richtung eine Hochschaltung um einen Gang, durch einmaliges Verschwenken des Wählhebels (1) in der entgegengesetzten Richtung und Kontaktgabe an einem Minus-Sensor (15) eine Rückschaltung um einen Gang manuell schaltbar ist und daß der Wählhebel (1) anschließend jeweils selbsttätig in die neutrale Mittellage zurückgestellt wird.

3. Schaltvorrichtung nach Anspruch 1 oder 2, **dadurch gekennzeichnet,** daß die Umschalteinheit (23, 24) bei einem Einführen des Wählhebels (1) aus der zweiten Schaltgasse (13) heraus in die erste Schaltgasse (2) eine Beibehaltung des aktuell eingelegten Getriebegangs (k) wenigstens solange bewirkt, bis das Steuergerät (11) eine automatische Getriebeganganpassung neu vorgenommen hat oder wie die Drehzahl (nmot) der Antriebs- Brennkraftmaschine (18) die obere Drehzahlgrenze (nmax) noch nicht überschritten oder die zweite Drehzahlgrenze (nmin) noch nicht unterschritten hat.

4. Schaltvorrichtung nach Anspruch 3, **dadurch gekennzeichnet,** daß die Umschalteinheit (23, 25) ein Starten der Brennkraftmaschine (18) bei einem in der zweiten Schaltgasse (13) befindlichen Wählhebel (1) verhindert.

5. Schalteinrichtung nach wenigstens einem der vorangehenden Ansprüche, **dadurch gekennzeichnet,** daß die Umschalteinheit (23, 25) ein Starten der Brennkraftmaschine (18) nur in einer Parkstellung (P) und einer Neutralstellung (N) des Wählhebels (1) in der ersten Schaltgasse (2) zuläßt.

## Claims

1. A gearshift device for a motor-vehicle automatic transmission controlled by an electronic control device, having a selector lever by means of which the different gears to be shifted automatically can be preselected by tilting the said selector lever in a first gearshift path, wherein the selector lever (1) is shiftable into a second gearshift path (13) parallel to the first gearshift path (2) via a cross-path (12), and wherein the forward gears (1, 2, 3, 4) of the transmission are manually shiftable by tilting the selector lever (1) in the second gearshift path (13), characterised in that the control device (11) has a change-over unit (23, 24) which is controlled by a sensor (14) detecting the change-over from the first gearshift path (2) to the second gearshift path (13) and which causes the gear (k) currently engaged to be retained when the selector lever (1) is moved out of the first gearshift path (2) into the second gearshift path (13) at least for as long as the rotational speed (nmot) of the internal combustion engine (18) driving the transmission does not exceed an upper rotational speed limit (nmax) or fall below a lower rotational speed limit (nmin) or the selector lever (1) is not tilted in the second gearshift path (13).

2. A gearshift device according to claim 1, characterised in that in the second gearshift path, by tilting the selector lever (1) once out of a neutral centre position and by making contact with a plus sensor (17) in one direction, shifting up by one gear can be carried out manually, and by tilting the selector lever (1) once in the opposite direction and making contact with a minus sensor (15), shifting down by one gear can be carried out manually, and in that the selector lever (1) is then automatically returned to the neutral centre position each time.

3. A gearshift device according to claim 1 or 2, characterised in that the change-over unit (23, 24) causes the gear (k) currently engaged to be retained when the selector lever (1) is moved out of the second gearshift path (13) into the first gearshift path (2) at least until the control device (11) has carried out an automatic gear readjustment or for as long as the rotational speed (nmot) of the driving internal combustion engine (18) does not exceed the upper rotational speed limit (nmax) or fall below the second rotational speed limit (nmin).

4. A gearshift device according to claim 3, characterised in that the change-over unit (23, 25) prevents the internal combustion engine (18) from starting when the selector lever (1) is in the second gearshift path (13).

5. A gearshift device according to at least one of the preceding claims, characterised in that the change-over unit (23, 25) only allows the internal combustion engine (18) to start when the selector lever (1) is in a parking position (P) or a neutral position (N) in the first gearshift path (2).

## Revendications

1. Dispositif de changement de vitesse pour une boîte automatique à commande électronique d'un véhicule automobile, comportant un levier de sélection dont le pivotement dans une première voie de commutation permet de présélectionner les différents rapports à commuter automatiquement, le levier de sélection (1) pouvant commuter, par une voie transversale, dans une seconde voie de commutation (12), parallèle à la première voie de commutation (2), et dans lequel le pivotement du levier de sélection (1) dans la seconde voie de commutation (13) permet de commander manuellement les marches avant (1, 2, 3, 4) de la boîte de vitesses, caractérisé en ce que l'appareil de commande (11) comporte une unité de commutation (23, 24), influencée par un capteur (14), détectant le passage de la première voie (2) à la seconde voie (13), laquelle unité de commutation, lorsque le levier de sélection (1), quittant la première voie de commutation (2) est introduit dans la seconde voie de commutation (13), provoque un maintien du rapport (k) actuellement engagé, au moins jusqu'à ce que la vitesse de rotation (nmot) du moteur à combustion interne (18), entraînant la boîte de vitesses, dépasse une vitesse limite supérieure (nmax) ou devienne inférieure à une vitesse limite inférieure (nmin), ou jusqu'à ce que le levier de sélection (1) soit pivoté dans la séconde voie de commutation (13).

2. Dispositif de changement de vitesse selon la revendication 1, caractérisé en ce que dans la seconde voie de commutation, par pivotement unique du levier de sélection (1) dans un sens, à partir de la position centrale de point mort et par contact avec un capteur plus (17), il est possible de commander manuellement un passage à la vitesse supérieure, et par pivotement unique du levier de sélection (1) dans le sens opposé et contact sur un capteur moins (15), un passage à une vitesse inférieure et en ce que le levier de sélection (1) est ensuite automatiquement replacé dans la position centrale de point mort.

3. Dispositif de changement de vitesse selon les revendications 1 ou 2, caractérisé en ce que l'unité de commutation (23, 24), lorsque le levier de sélection (1) est introduit, à partir de la seconde voie de commutation (13) dans la première voie de commutation (2), provoque un maintien du rapport (k) actuellement engagé, au moins jusqu'à ce que l'appareil de commande (11) procède à une nouvelle adaptation automatique du rapport ou jusqu'à ce que la vitesse de rotation (nmot) du moteur à combustion interne (18) d'entraînement dépasse la vitesse limite supérieure (nmax) ou devienne inférieure à la seconde vitesse limite (nmin).

4. Dispositif de changement de vitesse selon la revendication 3, caractérisé en ce que l'unité de commutation (23, 25) empêche un démarrage du moteur à combustion interne (18), lorsque le levier de sélection (1) se trouve dans la seconde voie de commutation (13).

5. Dispositif de changement de vitesse selon l'une au moins des revendications précédentes, caractérisé en ce que l'unité de commutation (23, 25) autorise un démarrage du moteur à combustion interne (8) uniquement en position de garage (P) et dans une position de point mort (N) du levier de sélection (1) dans la première voie de conmutation (2).
